**Europäisches Patentamt**

**European Patent Office**

**Office européen des brevets**

(19)

(11) Veröffentlichungsnummer: **0 029 952**
**B1**

(12) # EUROPÄISCHE PATENTSCHRIFT

(45) Veröffentlichungstag der Patentschrift:
**06.07.83**

(21) Anmeldenummer: **80107139.0**

(22) Anmeldetag: **18.11.80**

(51) Int. Cl.³: **F 24 J 3/02**

(54) Vorrichtung und Verfahren zum Erwärmen von Wasser durch Sonnenenergie.

(30) Priorität: **30.11.79 DE 2948207**

(43) Veröffentlichungstag der Anmeldung:
**10.06.81 Patentblatt 81/23**

(45) Bekanntmachung des Hinweises auf die Patenterteilung:
**06.07.83 Patentblatt 83/27**

(84) Benannte Vertragsstaaten:
**BE CH DE FR GB IT LI NL SE**

(56) Entgegenhaltungen:
**DE-A-2 442 529**
**DE-A-2 518 620**
**DE-A-2 604 361**
**FR-A-1 245 740**

(73) Patentinhaber: **HOECHST AKTIENGESELLSCHAFT,
Postfach 80 03 20, D-6230 Frankfurt/Main 80 (DE)**

(72) Erfinder: **Bayerle, Armin, Braunschweiger Weg 39,
D-6230 Frankfurt am Main 80 (DE)**
Erfinder: **Holz, Karl-Heinz, Bielefelder Strasse 85,
D-6230 Frankfurt am Main 80 (DE)**
Erfinder: **Lüke, Johannes, Lersnerstrasse 31,
D-6000 Frankfurt am Main (DE)**
Erfinder: **Riederer, Wolfgang, Schweriner Weg 1,
D-6238 Hofheim am Taunus (DE)**

## Vorrichtung und Verfahren zum Erwärmen von Wasser durch Sonnenenergie

Die Erfindung betrifft eine Vorrichtung zum Erwärmen von Wasser durch Sonnenenergie gemäß dem ersten Teil des Patentanspruchs 1 und ein Verfahren zum Betrieb dieser Vorrichtung.

Bekannt sind Systeme zum Erwärmen von Brauchwasser durch Sonnenenergie, die aus einem Primär- und einem Sekundärkreislauf bestehen. In dem geschlossenen Primärkreislauf wird die Wärme, welche die Sonnenkollektoren aus der Sonneneinstrahlung gewinnen, an eine Wärmeträgerflüssigkeit abgegeben. Diese überträgt die Wärme über einen Wärmetauscher an das Brauchwasser im Sekundärkreislauf. Im Primärkreislauf wird das Medium durch Schwerkraft oder eine Pumpe umgewälzt, sobald die Kollektortemperatur einige Grade über der des Brauchwassers ist. In der Regel enthält der Sekundärkreislauf einen mit dem Trinkwassernetz verbundenen Speicher für das erwärmte Brauchwasser, dessen Inhalt zum Zeitpunkt der Entnahme von Brauchwasser durch kaltes Frischwasser aufgefüllt wird.

Nachteilig bei diesen Systemen ist die Verwendung eines Wärmetauschers, denn für den Wärmeaustausch ist auf der Primärseite eine höhere Temperatur als auf der Sekundärseite erforderlich, wodurch es in der Regel notwendig ist, daß die Kollektortemperatur um 10−15°C über der des Brauchwasserspeichers liegt. Da mit steigender Temperatur der Kollektorwirkungsgrad abnimmt und der Wärmeverlust des Primärkreislaufs zunimmt, beeinträchtigt der Wärmetauscher den Systemwirkungsgrad. Nachteilig ist weiterhin, daß das erwärmte Brauchwasser bei Warmwasserentnahme im Speicher mit kaltem Frischwasser vermischt werden kann, wodurch sich die Speichertemperatur erniedrigt.

Bekannt sind auch Systeme, die aus einem einzigen Kreislauf bestehen. Bei ihnen wird das Frischwasser aus einem Schwimmerkasten direkt durch großvolumige Kollektoren, welche gleichzeitig als Warmwasserspeicher dienen, gefördert, sobald Brauchwasser entnommen wird.

Nachteilig bei diesen Systemen ist der Wärmeverlust der Speicherkollektoren, welcher stets eintritt, wenn die Einstrahlung gering ist, wie dies bei dem Durchzug von Wolken, am Abend oder in der Nacht der Fall ist.

Bekannt ist ferner ein Verfahren zur gesteuerten Aufheizung eines Flüssigkeitsspeichers und eine Speicheranlage zur Durchführung dieses Verfahrens. Bei diesem Verfahren wird ein Wärmeträger, beispielsweise Wasser, im Kreislauf geführt und nach Erwärmung in einem Vorratsgefäß mit kaltem Wasser in Berührung gebracht (vgl. die Offenlegungsschrift DE-2 518 620). Nachteilig ist auch bei diesem Verfahren, daß erwärmtes Brauchwasser bei Wasserentnahme mit kaltem Frischwasser vermengt werden kann.

Schließlich ist auch eine Vorrichtung zum Erwärmen von Wasser durch Sonnenenergie bekannt, bei welcher das kalte Frischwasser in die Leitung zwischen Speicher und Sonnenkollektor eingespeist wird (vgl. die Patentschrift FR-1 245 740). Eine zweite Frischwasserzufuhr über einen Niveauregler am Sonnenkollektor sorgt dafür, daß der Druck in der Vorrichtung konstant bleibt. Bei dieser Vorrichtung können nur geringe Mengen Warmwasser entnommen werden, da der Speicher durch die Warmwasserabnahmeleitung nicht entleert werden kann und sehr bald kaltes Wasser über den Kollektor nachströmt.

Es wurde nun gefunden, daß der Wirkungsgrad einer einen Sonnenkollektor enthaltenden Vorrichtung zum Erwärmen von Brauchwasser wesentlich verbessert werden kann, wenn ein Sonnenkollektor mit geringem Volumen, jedoch großer Oberfläche mit einem Speichergefäß mit variablem Volumen derart verbunden wird, daß das Frischwasser dem Kollektor direkt zugeführt werden kann, jedoch während der Entnahme von warmem Brauchwasser im wesentlichen kein Frischwasser in das System eingeführt wird, solange eine gewisse Mindestmenge Wasser im Speicher vorhanden ist.

Gegenstand der Erfindung ist somit die in den Ansprüchen genannte Vorrichtung und das mit Hilfe dieser Vorrichtung durchgeführte Verfahren zum Erwärmen von Wasser durch Sonnenenergie.

Durch dieses System kann gewährleistet werden, daß — ausreichende Sonneneinstrahlung vorausgesetzt — nur Wasser mit einer bestimmten vorgewählten Temperatur in den Speicher fließt. Das im Speicher befindliche Wasser kann zur weiteren Aufwärmung wiederholt durch den Kollektor geleitet werden. Das Umwälzen wird dabei durch eine Pumpe bewirkt, die zweckmäßigerweise in der Leitung vom Ausgang des Speichers zum Eingang des Kollektors angebracht ist. Ist die Vorrichtung so gestaltet, daß der Speicher höher als der Kollektor liegt, so erfolgt auch ohne Zwischenschaltung einer Umwälzpumpe eine stetige Zirkulation des Wassers, wenn die Temperatur des Kollektorwassers höher als die des Speicherwassers ist.

Der Sonnenkollektor hat ein im Verhältnis zur Oberfläche geringes Volumen. Dies bietet den Vorteil, daß größere Wärmeverluste in Perioden mit geringer Einstrahlung vermieden werden. Er besteht aus korrosionsfestem Material, welches kaltzäh und dehnbar ist, so daß bei großen Temperaturschwankungen, insbesondere auch bei starker Abkühlung und bei Eisbildung keine Beschädigung auftritt. Vorzugsweise besteht der Kollektor aus Kunststoff. An dem Kollektor befindet sich vorteilhafterweise ein Temperaturfühler, mittels welchem die Durchströmung des Kollektors gesteuert wird.

Bei Bedarf können auch mehrere Kollektoren hintereinander oder parallel geschaltet werden.

Der Speicher ist rundum geschlossen, um das Wasser vor Verunreinigungen zu schützen. Er ist so konstruiert, daß sich bei dem Zu- und Ablauf von Wasser kein Über- bzw. Unterdruck aufbauen kann, welcher den aus seiner Füllhöhe resultierenden statischen Druck überschreitet, d. h. er besitzt ein variables Volumen. Vorzugsweise verwendet man einen Speicher, dessen Außenfläche wenigstens teilweise aus flexiblem Material, z. B. einem beschichtetem Polyestergewebe, besteht. Benutzt man Speicher mit starrer Außenwand, so ist für eine Belüftung des Speichers zu sorgen. Er ist unabhängig von seiner Ausführung in jedem Fall mit einer Überlaufvorrichtung zu versehen.

Der Ausgang des Sonnenkollektors ist mit dem Eingang des Speichers durch eine Rohrleitung verbunden, ebenso der Ausgang des Speichers mit dem Eingang des Sonnenkollektors. Kollektor und Speicher bilden somit ein Kreislaufsystem. Zwischen dem Ausgang des Speichers und dem Eingang des Kollektors ist ein ein Rückschlagventil enthaltender Abzweig zu einem Warmwasserverbraucher angeordnet, danach ein Absperrventil und schließlich am Kollektoreingang der ebenfalls durch ein Ventil absperrbare Frischwasserzulauf. Der Abzweig zu dem Warmwasserverbraucher erhält vorteilhafterweise einen Druckwächter hinter dem Rückschlagventil. Falls der Speicher niedriger angebracht ist als der Kollektor, ist zwischen Speicherausgang und dem Abzweig zum Warmwasserverbraucher eine Umwälzpumpe in der Rohrleitung zum Kollektoreingang angeordnet.

Der Speicher erhält einen Füllstandsmesser. Durch diesen Füllstandsmesser wird bei teilweise gefülltem Speicher oder auch bei Unterschreiten der beliebig vorgegebenen Füllhöhe des Speichers das in der Frischwasserzuleitung zum Kollektor angebrachte Ventil geöffnet. Bei gefülltem Speicher oder bei Überschreiten der beliebig vorgegebenen Füllhöhe des Speichers bleibt das Ventil in der Frischwasserzuleitung geschlossen. Dieses Ventil wird ebenfalls bei Unterschreiten einer bestimmten, vorzugebenden Mindestfüllmenge im Speicher durch den Füllstandsmesser geöffnet, so daß gewährleistet ist, daß am Speicherausgang stets Wasser in beliebiger Menge entnommen werden kann, und zwar auch dann, wenn die am Thermofühler des Kollektors eingestellte Temperatur mangels ausreichender Sonneneinstrahlung nicht erreicht werden kann.

Dieses Ventil wird also geöffnet, wenn die Temperatur im Kollektor gleich oder größer ist als die vorgewählte Temperatur und/oder wenn der minimale Füllstand im Speicher unterschritten wird. Es wird geschlossen, wenn die Temperatur im Kollektor gleich oder niedriger ist als die vorgewählte Temperatur und/oder wenn die maximale Füllhöhe im Speicher erreicht oder überschritten wird. Dabei hat in allen Fällen die Steuerung des Ventils durch den Füllstand im Speicher den Vorrang vor der Steuerung durch die Temperatur im Kollektor.

Ist die Temperatur im Kollektor höher als die Temperatur im Speicher, so empfiehlt es sich, insbesondere bei gefülltem Speicher, das Speicherwasser durch den Kollektor zirkulieren zu lassen und dadurch eine höhere Speichertemperatur zu erreichen. Eine solche Zirkulation stellt sich — wie bereits erwähnt — durch Wärmeströmung von selbst ein, wenn der Speicher oberhalb des Kollektors angeordnet ist. Auch in diesem Fall ist es allerdings vorteilhaft, zur Erzielung einer effektiveren Umwälzung eine Pumpe in den Kreislauf Kollektor—Speicher—Kollektor einzuschalten. Notwendig ist die Verwendung einer Umwälzpumpe, wenn durch Konvektion keine Zirkulation des Speicherwassers durch den Kollektor erzielt werden kann, wenn also der Speicher unterhalb des Kollektors angebracht ist. In diesem Fall wird der Speicher mit einem Thermofühler versehen. Bei einer bestimmten Differenz der im Speicher gemessenen Temperatur gegenüber der am Thermofühler des Kollektors gemessenen, wird die Umwälzpumpe eingeschaltet, sofern der Füllstandsmesser im Speicher eine bestimmte vorgegebene Füllhöhe oder aber die vollständige Füllung des Speichers anzeigt.

Im folgenden wird eine Vorrichtung zur Erwärmung von Brauchwasser beschrieben, die eine besonders vorteilhafte und zweckmäßige Ausgestaltung der Erfindung darstellt. Die Erfindung ist jedoch nicht auf diese Vorrichtung beschränkt, sie ist ebenfalls nicht beschränkt auf eine Vorrichtung zur Erwärmung von Wasser, sondern kann durch einfache und naheliegende Modifikationen auch zur Erwärmung von anderen Flüssigkeiten für z. B. Heizungszwecke verwendet werden.

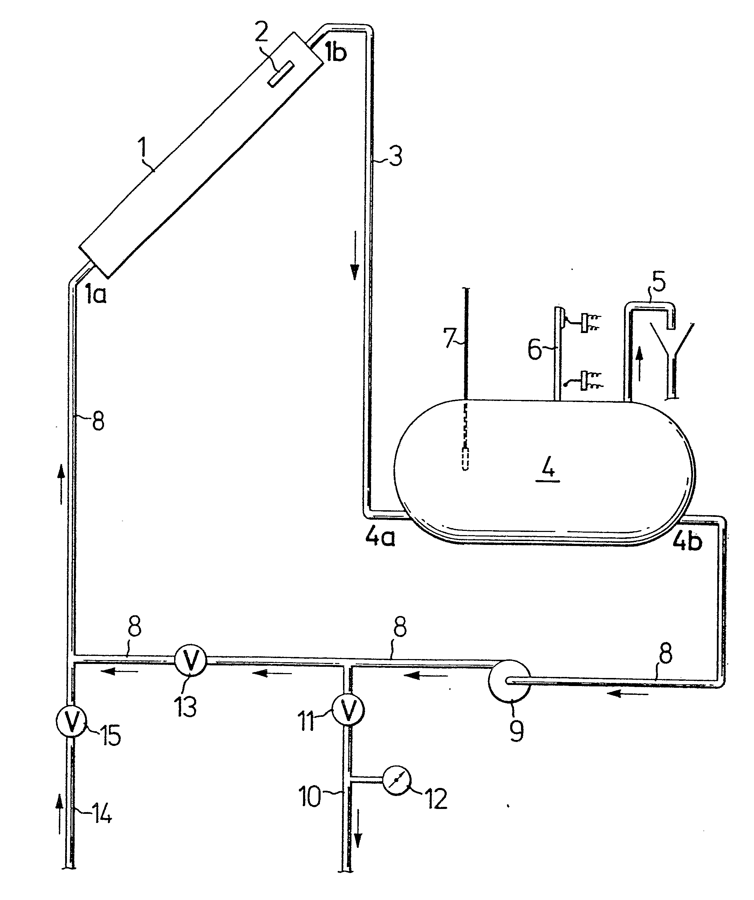

Die einzige Figur zeigt eine Ausführungsform der erfindungsgemäßen Vorrichtung im Schema.

Gemäß der Figur ist der Ausgang (1b) des aus Kunststoff bestehenden Sonnenkollektors (1), welcher mit einem Thermofühler (2) versehen ist, über die Rohrleitung (3) mit dem Eingang (4a) des Speichers (4) verbunden. Dieser besteht aus einem flexiblen, beschichteten Polyestergewebe und ist mit einem Überlauf (5), einem Füllstandsmesser (6) und einem Thermofühler (7) ausgerüstet. Eine weitere Rohrleitung (8) verbindet den Ausgang (4b) des Speichers (4) mit dem Eingang (1a) des Kollektors (1), so daß ein Kreislaufsystem entsteht. In diese Rohrleitung (8) sind eingebaut — vom Speicher (4) aus gesehen — eine Umwälzpumpe (9), ein Abzweig (10) zum Warmwasserverbraucher mit Rückschlagventil (11) und dahinterliegendem Druckwächter (12), ein Magnet-Absperrventil (13) und der Frischwasserzulauf (14) mit Magnet-Absperrventil (15). Die Steuereinrichtung, welche die von den Meßfühlern ausgehenden Signale in Impulse für den Anlauf der Umwälzpumpe bzw. für die Betätigung der Ventile umsetzt, ist nicht abgebildet. Im folgenden ist immer nur diese eine Steuereinrichtung gemeint, wenn von einer Steuereinrichtung die Rede ist.

Der Speicher (4) wird durch Öffnen des Magnetventils (15) dann aufgefüllt, wenn die Kollektortemperatur, welche mittels des Temperaturfühlers (2) gemessen wird, im Bereich einer für Brauchwasser gewünschten Temperatur von T = z. B. 42 bis 45°C liegt. Die durch den Thermofühler (2) geregelte Steuereinrichtung öffnet das Magnetventil (15), Frischwasser strömt in den Kollektor, und das im Kollektor befindliche Wasser wird mit einer Temperatur T durch die Rohrleitung (3) in den Speicher (4) gedrückt, bis die Temperatur am Thermofühler (2) unter den vorgegebenen Wert absinkt und damit das Magnetventil (15) über die Steuereinrichtung wieder geschlossen wird. Andererseits wird nach Erreichen eines vorgegebenen maximalen Füllstands im Speicher (4), welcher durch den Füllstandsfühler (6) gemessen wird, das Magnetventil (15) ebenfalls geschlossen. Es bleibt geschlossen, unabhängig von der am Temperaturfühler (2) erreichten Temperatur, bis der Füllstand im Speicher unter die vorgegebene maximale Höhe absinkt. Sobald nun bei gefülltem Speicher (4) die Kollektortemperatur infolge der Sonneneinstrahlung über der des Speicherwassers liegt, welche von dem Temperaturfühler (7) gemessen wird, öffnet die Steuereinrichtung das Magnetventil (13) und schaltet die Umwälzpumpe (9) ein. Dadurch wird der Speicherinhalt durch den Kollektor (1) gefördert, wobei sich das Wasser erwärmt. Bei Absinken der Kollektortemperatur unter die des Speichers (4) schaltet die Steuereinrichtung die Pumpe (9) aus und schließt das Magnetventil (13).

Bei Entnahme von Brauchwasser am Abzweig (10) sinkt der Druck am Druckwächter (12). Durch dessen Signal schließt die Steuereinrichtung das Magnetventil (13), sofern es offen war, und schaltet die Umwälzpumpe (9) ein, falls sie nicht in Betrieb war. Dadurch wird der Pumpendruck zur Erhöhung des Brauchwasserdrucks im Abzweig (10) wirksam.

Das Ventil (11) im Abzweig (10) verhindert ein Rückströmen des unter Druck stehenden Brauchwassers in den Kollektorkreislauf.

Wird über dem Abzweig (10) soviel Wasser entnommen, daß die Füllhöhe im Speicher (4) unterhalb einer vorgegebenen minimalen Höhe absinkt, so wird durch den Füllstandsmesser (6) das Magnetventil (15) geöffnet, so daß Frischwasser aus dem Zulauf (14) über den Kollektor (1) in den Speicher (4) und von hier aus in den Abzweig (10) in beliebiger Menge nachlaufen kann.

Für den Fall, daß die im Kollektor (1) umgesetzte Sonnenenergie nicht ausreicht, den Inhalt des Speichers (4) auf die vorgesehene Temperatur zu erwärmen, sei es wegen zu geringer Sonneneinstrahlung oder zu großer Warmwasserentnahme, ist es empfehlenswert, eine Zusatzheizung in dem System vorzusehen. Diese Zusatzheizung (nicht abgebildet in der Figur) kann an verschiedenen Stellen angeordnet werden, beispielsweise im Speicher (4) oder parallel zum Kollektor (1) zwischen den Rohrleitungen (3) und (8) oder in der Nähe des Warmwasserverbrauchers. Das An- und Abschalten dieser Zusatzheizung kann über den Thermofühler (7) durch die Steuereinrichtung erfolgen.

Die erfindungsgemäße Vorrichtung besitzt nicht die Nachteile der bekannten Systeme. Die Vorrichtung benötigt keinen Wärmetauscher, der bei den bekannten Zweikreissystemen den Systemwirkungsgrad verschlechtert. Bei dem erfindungsgemäßen System können Kollektoren verwendet werden, deren Volumen im Verhältnis zur Absorberoberfläche gering ist. Die bei Speicherkollektoren in Einkreissystemen entstehenden großen Wärmeverluste während Zeiten geringer Sonneneinstrahlung werden dadurch vermieden. Bei der Vorrichtung gemäß der Erfindung ist außerdem dafür gesorgt, daß kaltes Frischwasser in der Regel nicht mit dem erwärmten Speicherwasser vermischt werden kann, solange eine gewisse Mindestmenge Wasser im Speicher vorhanden ist. Hierdurch wird gewährleistet, daß man im Unterschied zu den bekannten Systemen eine der Speicherfüllung entsprechende Wassermenge bei konstanter Temperatur entnehmen kann.

**Patentansprüche**

1. Vorrichtung zum Erwärmen von Wasser durch Sonnenenergie bestehend aus einem Sonnenkollektor (1) und einem Speicher (4), bei welcher der Ausgang (1b) des Sonnenkollektors (1) mit dem Eingang (4a) des Speichers (4) mit einer ersten Rohrleitung (3) und der Ausgang (4b) des Speichers (4) mit dem Eingang (1a) des Sonnenkollektors (1) mit einer zweiten Rohrleitung (8) verbunden sind, und in der zweiten Rohrleitung (8) ein durch ein Ventil (15) absperrbarer Frischwasserzulauf (14) angeordnet ist, dadurch gekennzeichnet, daß in der zweiten Rohrleitung (8) zwischen dem Ausgang (4b) des Speichers (4) und dem Frischwasserzulauf (14) ein ein Rückschlagventil (11) enthaltender Abzweig (10) zu einem Warmwasserverbraucher und ein Absperrventil (13) angeordnet sind und daß im Speicher (4) ein Füllstandsmesser (6) und ein Thermofühler (7) vorgesehen sind, welche mit dem Frischwasserventil (15) gekoppelt sind.

2. Vorrichtung gemäß Anspruch 1, dadurch gekennzeichnet, daß zwischen dem Ausgang (4b) des Speichers (4) und dem Abzweig (10) zum Warmwasserverbraucher eine Umwälzpumpe (9) angeordnet ist.

3. Vorrichtung gemäß den Ansprüchen 1 und 2, dadurch gekennzeichnet, daß der Speicher (4) ein variables Volumen besitzt.

4. Vorrichtung gemäß den Ansprüchen 1 bis 3, dadurch gekennzeichnet, daß die Außenfläche des Speichers (4) wenigstens teilweise aus einem flexiblen Material besteht.

5. Verfahren zum Erwärmen von Wasser in der Vorrichtung gemäß Anspruch 1, dadurch gekennzeichnet, daß das den Frischwasserzulauf (14) zum Kollektor (1) regelnde Absperrventil (15) geöffnet wird, wenn die Temperatur im Kollektor (1) gleich oder größer ist als die vorgewählte Temperatur und/oder wenn der minimale Füllstand im Speicher (4) unterschritten wird und geschlossen wird, wenn die Temperatur im Kollektor (1) gleich oder niedriger ist als die vorgewählte Temperatur und/oder wenn der maximale Füllstand im Speicher (4) erreicht oder überschritten wird, wobei die Steuerung des Ventils (15) durch den Füllstand im Speicher (4) den Vorrang vor der Steuerung durch die Temperatur im Kollektor (1) hat.

6. Verfahren gemäß Anspruch 5, dadurch gekennzeichnet, daß der Inhalt des Speichers (4) durch den Kollektor (1) gefördert wird, wenn bei gefülltem Speicher (4) die Temperatur im Kollektor (1) über der Temperatur im Speicher (4) liegt.

## Claims

1. Equipment for heating water by solar energy consisting of a solar collector (1) and a reservoir (4), the outlet (1b) of the solar collector (1) being connected with the inlet (4a) of the reservoir (4) by a first tubular duct (3), the outlet (4b) of the reservoir (4) being connected with the inlet (1a) of the solar collector (1) by a second tubular duct (8), and in the second tubular duct (8) being arranged a fresh water feeder (14) capable of being closed by a valve (15), wherein the second tubular duct (8) between the outlet (4b) of the reservoir (4) and the fresh water feeder (14) is provided with a branch (10) to a hot water service main containing a nonreturn valve (11) and a stop valve (13), and the reservoir (4) is provided with a level indicator (6) and a thermocouple (7), which control the valve (15) in the fresh water feeder (14).

2. The equipment as claimed in claim 1, wherein a circulating pump (9) is arranged between the outlet (4b) of the reservoir (4) and the branch (10) to the hot water service main.

3. The equipment as claimed in claims 1 and 2, wherein the reservoir (4) has a varaible volume.

4. The equipment as claimed in claims 1 to 3, wherein the outer wall of the reservoir (4) consists at least partially of a flexible material.

5. A process for heating water by means of the equipment of claim 1, which comprises opening the stop valve (15) regulating the feed (14) of fresh water to the collector (1) when the temperature in the collector (1) ist the same as or higher than the predetermind temperature, and/or when the minimum level in the reservoir (4) ist not attained, and closing it when the temperature in the collector (1) is the same as or lower than the predetermined temperature, and/or when the maximum level in the reservoir (4) is attained or exceeded; control of the valve (15) by the level in the reservoir (4) having priority over control by the temperature in the collector (1).

6. The process as claimed in claim 5, whic.. comprises conveying the contents of the reservoir (4) through the collector (1) when in the case of the reservoir (4) being filled up the temperature in the collector (1) is superior to that in the reservoir (4).

## Revendications

1. Dispositif pour chauffer l'eau par l'énergie solaire, comprenant un capteur solaire (1) et un réservoir (4), la sortie (1b) du capteur solaire (1) étant reliée à l'entrée (4a) du réservoir (4) par une première tuyauterie (3), la sortie (4b) du réservoir (4) étant reliée à l'entrée (1a) du capteur solaire (1) par une deuxième tuyauterie (8), une arrivée d'eau fraîche (14), pouvant être fermée par une vanne (15), étant disposée dans la deuxième tuyauterie (8), dispositif caractérisé en ce qu'il y a dans la deuxième tuyauterie (8), entre la sortie (4b) du réservoir (4) et l'arrivée d'eau fraîche (14) un branchement (10), contenant un clapet de retenue (11), allant vers un consommateur d'eau chaude, et une vanne d'arrêt (13), un indicateur de niveau (6) et une sonde thermométrique (7), couplés à la vanne d'eau fraîche (15), étant prévus dans le réservoir (4).

2. Dispositif selon la revendication 1, caractérisé en ce qu'entre la sortie (4b) du réservoir (4) et le branchement (10) allant vers le consommateur d'eau chaude, il est prévu une pompe de circulation (9).

3. Dispositif selon l'une quelconque des revendications 1 ou 2, caractérisé en ce que le réservoir (4) a un volume variable.

4. Procédé selon l'une quelconque des revendications 1 à 3, caractérisé en ce que la surface extérieure du réservoir (4) est, au moins en partie, en un matériau flexible.

5. Procédé pour cauffer l'eau dans le dispostif selon la revendication 1, caractérisé en ce que la vanne d'arrêt (15), qui règle l'arrivée d'eau fraîche (14) allant vers le capteur (1) s'ouvre quand la température dans le capteur (1) est supérieure ou égale à la température présélectionnée et/ou quand le niveau dans le réservoir (4) passe en-dessous du niveau minimum, et se ferme quand la température dans le capteur (1) est inférieure ou égale à la température présélectionnée et/ou quand le niveau dans le réservoir (4) atteint ou dépasse le niveau maximum, la commande de la vanne (15) par le niveau dans le réservoir (4) ayant la priorité sur la commande par la température dans le capteur (1).

6. Procédé selon la revendication 5, caractérisé en ce que le contenu du réservoir (4) est refoulé à travers le capteur (1) quand, le réservoir (4) étant rempli, la température dans le capteur (1) est supérieure à la température dans le réservoir (4).